# EUROPÄISCHE PATENTSCHRIFT

(11) **EP 0 734 653 B1**
(45) Veröffentlichungstag und Bekanntmachung des Hinweises auf die Patenterteilung: **06.12.2000**
(21) Anmeldenummer: 96102154.0
(22) Anmeldetag: 14.02.1996
(51) Int. Cl.: A22C 25/08

(54) **Automatische Einrichtung zum geordneten Überführen von Fischen in eine Fischbearbeitungsmaschine**
Automatic arrangement for orderly feeding fish to a fish dressing machine
Aménagement automatique pour le transfert ordonné dans une machine de traitement de poissons

(30) Priorität: 29.03.1995 DE 19511489
(43) Veröffentlichungstag der Anmeldung: 02.10.1996
(73) Patentinhaber: NORDISCHER MASCHINENBAU RUD. BAADER GMBH + CO KG, 23560 Lübeck (DE)
(72) Erfinder: Grosseholz, Werner, D-23628 Krummesse (DE); Kobs, Jürgen, D-23611 Bad Schwartau (DE); Torkler, Conrad, D-23883 Zecher (Hakendorf) (DE); Wenzel, Werner, D-22926 Ahrensburg (DE)
(74) Vertreter: Patentanwälte Wenzel & Kalkoff

(56) Entgegenhaltungen:
- EP-A- 0 116 782
- EP-A- 0 384 956
- EP-A- 0 548 383
- DE-A- 1 454 085
- DE-A- 4 038 078
- DE-B- 2 709 152
- DE-C- 865 525
- FR-A- 1 010 092
- GB-A- 953 518
- GB-A- 1 090 737
- GB-A- 2 179 540
- US-A- 2 771 632
- US-A- 4 051 952
- DATABASE WPI Section Ch, Week 9329 8.September 1993 Derwent Publications Ltd., London, GB; Class D12, AN 9329 XP002007106 & SU-A-1 752 309 (ZOLOTAREV)

## Beschreibung

Die Erfindung betrifft eine automatische Einrichtung zum Ordnen und einheitlichen Ausrichten von Fischen zwecks automatischem Einführen in eine und Bearbeiten der Fische in einer Fischbearbeitungsmaschine.

Eine derartige Automatisierung, d. h. ein bedienerfreier Betrieb solcher Einrichtungen von der chargenweisen Aufgabe bis zur Eingabe in und Durchlauf durch die Bearbeitungsmaschine ist aufgrund der unterschiedlichen Eigenschaften des Naturproduktes Fisch, wie z. B. Größe, Konsistenz, Gestalttreue u. a. sowie aufgrund der zu berücksichtigenden Durchsatzleistung sehr problematisch.

Eine derartige Einrichtung ist zum Beispiel aus der GB 1090737 bekannt. Hier werden ein Verfahren und eine Vorrichtung zum Orientieren und zum geordneten Überführen von Fischen beschrieben.
Weiter ist eine dafür vorgesehene Einrichtung der EP 0116 782 zu entnehmen. Zentrales Element dieser aus Zubringerförderer, Längsrichter und Bauch-Rücken-Richter bestehenden Einrichtung ist ein Bilderfassungssystem, welches dem Längsrichter nachgeordnet ist und eine Bildinformation liefert, die eine Positionierung jedes Fisches in eine für das Köpfen optimale Lage ermöglicht. Zu diesem Zweck kontrolliert das Bilderfassungssystem gleichzeitig die Ausrichtung jedes Fisches und steuert dessen Förderweg beeinflussende Weichen, so daß jeder Fisch individuell gehandhabt, d. h. bei fehlerhafter Kopf-Schwanz-Ausrichtung ausgeworfen und bei fehlerhafter Bauch-Rücken-Ausrichtung in eine Wendestrecke geleitet wird.

Wie eine Fehleranalyse erweist, ist eine erste Voraussetzung für die optimale Funktion einer solchen Einrichtung, daß eine sichere Vereinzelung der Fische erfolgt, um die Möglichkeit einer gegenseitigen Behinderung während des Ausrichtprozesses auszuschließen. Weiter ist es in diesem Sinne unerläßlich, daß eine sicher kontrollierbare Übergabe der Fische in die Bearbeitungsmaschine erfolgt, was auch im Hinblick auf einen optimalen Wirkungsgrad der Maschine von Bedeutung ist.

Es ist die Aufgabe der Erfindung, eine Einrichtung vorzuschlagen, die unter vergleichsweise geringem Aufwand in der Lage ist, die Fische mit höchster Sicherheit einheitlich auszurichten und bei hoher Leistung eine quasi Vollbelegung der Bearbeitungsmaschine zu erreichen.

Dieses Ziel wird erfindungsgemäß mittels einer automatischen Einrichtung zum geordneten Überführen von Fischen in eine Fischbearbeitungsmaschine erreicht, welche umfaßt: einen Zubringerförderer, Mittel zum Verteilen und Entzerren der Fische aus einer Fischmasse, Mittel zum Längsteilen der Fische mit einer Wendevorrichtung zum Ausrichten der Fische in einheitliche Kopf-Schwanz-Lage, Mittel zum Ausrichten der Fische in einheitliche Bauch-Rücken-Lage, Mittel zur Einzelentnahme und taktweisen Eingabe der Fische in einen Querförderer mit Kammern zur Einzelaufnahme der Fische,Sensormittel zur Kontrolle der Bauch-Rücken-Lage jedes Fisches und Mittel zum Wenden fehlliegender Fische in einheitliche Bauch-Rücken-Lage, wobei die Sensormittel einen über der Bahn des Querförderers angeordneten Reflextaster aus einem Senderteil und einem Empfängerteil umfassen.

Die damit erzielbare Funktionssicherheit liegt dabei in der Kombination der Optimierungsmaßnahmen, die sich in der Ausgestaltung dieser Mittel, ihrer gegenseitigen Zuordnung und ihrer Folgeanordnung manifestieren. Entsprechende vorteilhafte Einzelheiten sind den Unteransprüchen zu entnehmen.

Dabei bewirken die Ausführungsmerkmale der Mittel zum Verteilen und Entzerren, daß die Fische auch bei schubweiser Zuführung eine Längsausrichtung und Vereinzelung erfahren, welcher Effekt eine wesentliche Grundlage für eine einwandfreie Funktion der nachgeschalteten Mittel zum Längsausrichten bildet. Deren Richtrinne ist dabei so ausgestaltet, daß die Fische in eine Teilbahn derselben überführt werden, in der dann eine weitere Entzerrung dadurch erfolgt, daß die Fische infolge der Oszillationsbewegung der Richtrinne jeweils in Schwimmrichtung bewegt werden. Im statistischen Mittel wird damit die Hälfte der der Richtrinne zugeteilten Fische entgegengesetzt zur Arbeitsrichtung der Gesamtlage gefördert, wobei die in deren Weg angeordnete Wendevorrichtung eine Wendung und gleichzeitig Zuweisung dieser Fische in die andere Teilbahn der Richtrinne bewirkt, wodurch die Fische in zwei gleichgerichteten Strömen ohne gegenseitige Behinderung weitergeführt werden. In der folgenden Bauch-Rücken-Ausrichtstation wird jeder Fisch unter Nutzung seiner Querschnittsgeometrie im Durchlauf zunächst in Schwimmlage aufgerichtet und dann in bezüglich der Lage seines Rückens einheitliche Seitenlage überführt, in welcher Ausrichtung die Fische in Warteposition gehalten werden, aus der sie einzeln abgerufen und taktweise weitergeleitet werden.

Vorzugsweise sind die entsprechenden Mittel so ausgelegt, daß die Fische trotz hoher Taktfolge keine sie verletzende Strapazierung erfahren, was dadurch erreicht wird, daß das Erfassen der Fische in der Warteposition bei relativ niedriger Geschwindigkeit erfolgt, die zur Abgabe der Fische hin gesteigert wird, so daß verletzende Beschleunigungskräfte vermieden werden.

Zur Korrektur eventuell dann noch verbleibender Bauch-Rücken-Fehlausrichtungen können im Bereich des der Bearbeitungsmaschine als Zubringerförderer dienenden Querförderers Mittel zum Wenden solcher Fische angeordnet sein, die durch lichtoptische Sensormittel bedarfsweise aktivierbar sind. Die Sensormittel können vorzugsweise als Reflextaster ausgebildet sein, dessen Reflexsignal bezüglich seines Intensitätsverlaufes ausgewertet wird. Aufgrund der Dunkelfärbung des Rückens und der Hellfärbung des Bauches der Fische wird dabei durch eine Minimum-Maximum-Folge eine Falschlage signalisiert, die durch Aktivierung der Wendemittel korrigiert werden kann. Zu diesem Zweck ist der Wendehebel gegen die Wendescheibe steuerbar, so daß an dem fehlausgerichteten Fisch ein Wendemoment wirksam wird, das diesen um seine Längsachse um 180 ° wendet.

Die erfindungsgemäße Einrichtung wird nachstehend anhand eines in der Zeichnung dargestellten Ausführungsbeispieles näher erläutert. Es zeigen
- Fig. 1: eine schematische Gesamtansicht einer einbahnigen Einrichtung in perspektivischer Ansicht mit aus Gründen der Übersichtlichkeit gegenüber der Längsrichteinrichtung überhöht dargestelltem Förderer,
- Fig. 2: eine Querschnittansicht der Mittel zum Verteilen und Entzerren der Fische, lediglich einbahnig dargestellt,
- Fig. 3: einen Längsschnitt durch die Mittel zum Längsrichten der Fische mit integrierter Kopf-Schwanz-Wendevorrichtung,
- Fig. 4: eine Einzelheit der Wendevorrichtung nach Fig. 3;
- Fig. 5: das Antriebsschema der Richtrinnen bei einer Vierbahn-Ausführung der Mittel zum Längsrichten, von unten betrachtet;
- Fig. 6: eine schematische Seitenansicht der Mittel zur Vereinzelung,
- Fig. 7: eine schematische Ansicht der Sensormittel,
- Fig. 8: eine schematische Seitenansicht der Mittel zum Wenden bezüglich Bauch-Rücken-Lage fehlliegender Fische und
- Fig. 9: eine Darstellung des Bauch-Rücken-Wendevorganges in a) bis c) einzelnen Phasen,

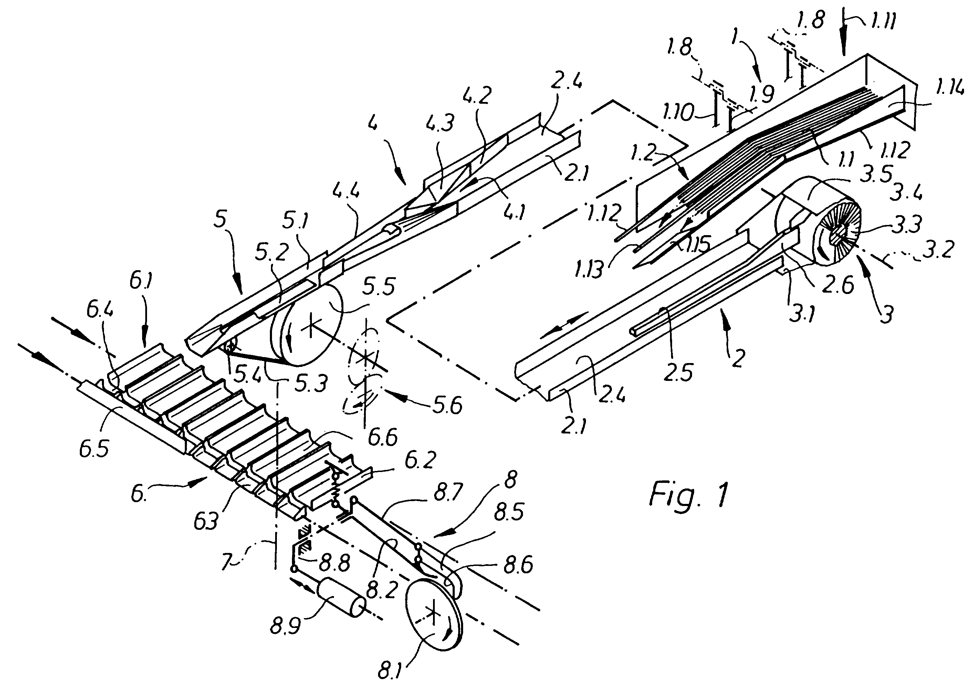

Wie aus Fig. 1 hervorgeht, umfaßt die Einrichtung zum geordneten Überführen von Fischen in eine Fischbearbeitungsmaschine einen nicht gezeigten, üblicherweise als Schrägförderer ausgebildeten Zubringerförderer, einen die Fische verteilenden und entzerrenden Förderer 1, eine Längsrichteinrichtung 2 mit einer Richtrinne 2.1 für die Fische, eine Wendevorrichtung 3 zum Ausrichten der Fische in einheitliche Kopf-Schwanz-Lage, eine Ausrichtvorrichtung 4 zum Ausrichten der Fische in einheitliche Bauch-Rücken-Lage, eine Takteinrichtung 5 zur Einzelübernahme der bereitgestellten Fische und deren taktweiser Eingabe in einen Querförderer 6, Meßmittel 7 zur Kontrolle der Bauch-Rücken-Lage jedes Fisches und einen Wendemechanismus 8 zum Wenden fehlliegender Fische.

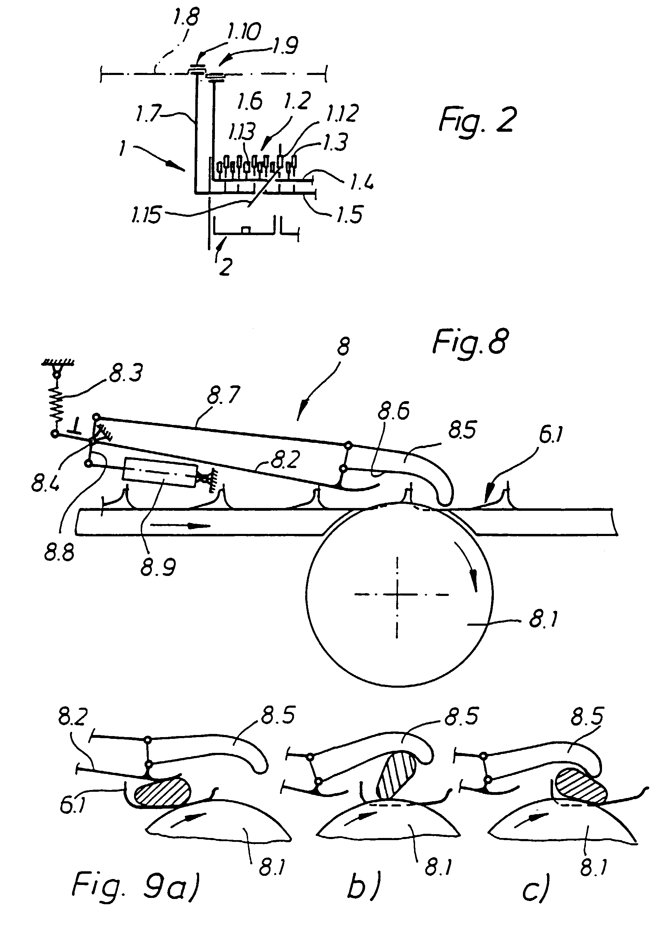

Der Förderer 1 besteht entsprechend Figuren 1 und 2 aus einem Wanderrost 1.1 mit einer Förderfläche 1.2, die aus in Förderrichtung der Fische ausgerichteten und nebeneinander liegenden Roststäben 1.3 gebildet ist. Die Roststäbe 1.3 sind, wie in Fig. 2 ersichtlich, durch Joche 1.4 und 1.5 so miteinander verbunden, daß die Rostfläche aus zwei kammartig ineinander greifenden Teilrosten gebildet wird. Jeder Teilrost ist über Tragarme 1.6 bzw. 1.7 mit einem Paar synchron umlaufender Kurbelwellen 1.8 verbunden, wobei die Tragarme 1.6 und 1.7 der beiden Teilroste jeweils an zueinander um 180° versetzten Kurbeln 1.9 und 1.10 angreifen. Die Förderfläche 1.2 ist im Aufgabebereich 1.11 ansteigend und im Abgabebereich abfallend ausgeführt, wobei die Förderfläche 1.2 über der Richtrinne 2.1 der Längsrichteinrichtung 2 endet. Die Breite der Förderfläche 1.2 ist mit der Breite der Richtrinne 2.1 abgestimmt, wobei die Randstäbe 1.12 sowie der Mittelstab 1.13 verlängert sind. Für eine mehrbahnige Ausführung des Wanderrostes 1.1 übernimmt ein auf dem inneren Randstab 1.12 angebrachtes Schulterelement 1.14 die Abgrenzung gegenüber der benachbarten Förderfläche. Im Bereich der Verlängerung des Randstabes 1.12 ist an dessen Unterseite eine Leitfläche 1.15 angeordnet, die über der Längsmitte der Richtrinne 2.1 endet.

Die Richtrinne 2.1 der Längsrichteinrichtung 2 weist einen U-förmigen Querschnitt auf und ist auf geeignete Weise längsoszillierend angetrieben. Um die Massenkräfte zu eliminieren, sind bei einer vierbahnigen Ausführung jeweils eine äußere Richtrinne und die neben der anderen äußeren befindliche Richtrinne durch ein Paar zweiarmiger Lenker 2.2 miteinander verbunden, die um eine vertikale Mittelachse 2.3 schwenkbar gelagert sind. Der Antrieb erfolgt so, daß die äußeren Richtrinnen gegenüber den inneren gegenläufig oszillieren.

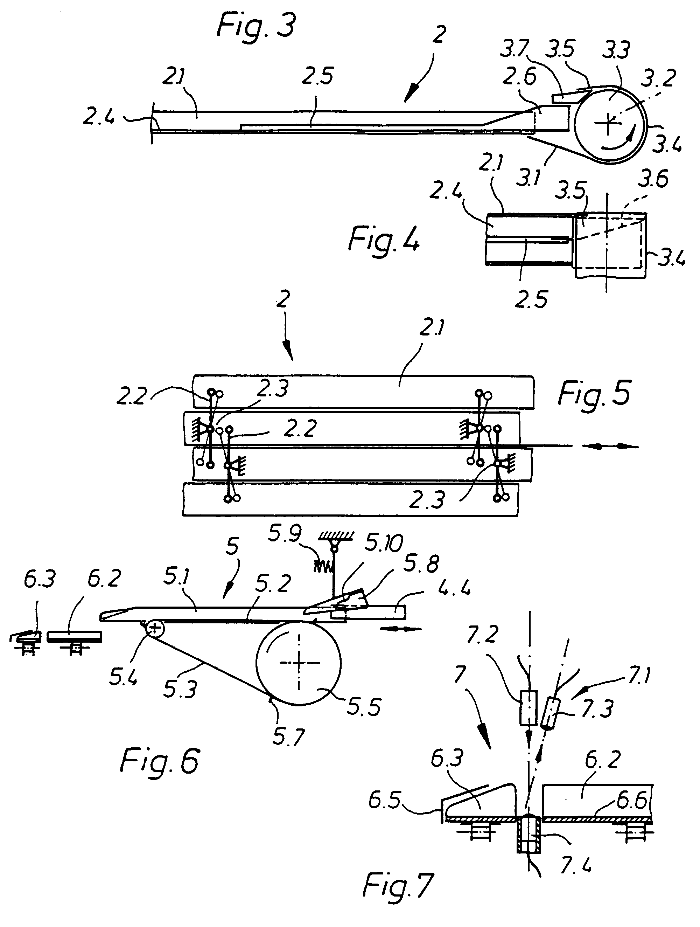

Die Richtrinne 2.1 ist in ihrem Aufgabebereich mit einer ihre Stützfläche 2.4 längsmittig in zwei Teilbahnen teilenden Leitschiene 2.5 versehen, die über das rückwärtige Ende der Richtrinne 2.1 hinaus verlängert ist und in einem Trennkeil 2.6 endet. Unter dem Ende der Richtrinne 2.1 ist eine Rutsche 3.1 angeordnet, die Bestandteil der Wendevorrichtung 3 ist. Diese besteht entsprechend Figuren 1 und 3 aus einer um eine horizontale Achse 3.2 umlaufend angetriebenen Bürstenwalze 3.3, an deren Unterseite die Rutsche 3.1 eine Tangentenebene bildet. Die Rutsche 3.1 geht in einen Leitmantel 3.4 über, der den rückwärtigen Umfang der Bürstenwalze 3.3 umgibt und über deren Kulminationspunkt hinaus in einer zu der Stützfläche 2.4 der Richtrinne 2.1 nach vorn geneigten Leitfläche 3.5 endet. An der Innenseite des Leitmantels 3.4 befindet sich ein schraubengangförmiger Leitsteg 3.6 (Fig. 4), der mit einem Endstück 3.7 an den Trennkeil 2.6 der Leitschiene 2.5 der Richtrinne 2.1 berührungsfrei anschließt.

Die Vorrichtung 4 zum Ausrichten der Fische in einheitliche Bauch-Rücken-Lage ist der Richtrinne ausgangsseitig zugeordnet und besteht aus einander gegenüberliegenden, einen Leitkanal 4.1 bildenden Leitflächen 4.2, die eingangs des Leitkanals 4.1 mit Ausformungen 4.3 zum Ableiten überschüssig herangeführter Fische versehen sind. Ausgangsseitig sind die Leitflächen 4.2 gleichsinnig verdrillt ausgeführt, so daß der Kanalquerschnitt beim Durchgang der Fische eine Drehung um ihre Längsachse bewirkt.

Der Leitkanal 4.1 setzt sich in einer Überleitrinne 4.4 fort, der sich die Einrichtung 5 zur Einzelübernahme der bereitgestellten Fische und deren taktweise Weitergabe anschließt (Fig. 6). Die Einrichtung 5 umfaßt eine Leitrinne 5.1 U-förmigen Querschnitts, deren Bodenfläche durch den Fördertrum 5.2 eines endlosen Fördergurtes 5.3 gebildet ist. Der Fördergurt 5.3 ist um eine Umlenkrolle 5.4 und eine Antriebsscheibe 5.5 geführt und an seiner Förderfläche mit in einer Reihe nebeneinander angeordneten Stacheln 5.7 bestückt, deren Teilung zu dem Umfang der Antriebsscheibe in einem ganzzahligen Verhältnis steht. Die Antriebsscheibe 5.5 ist über ein Ellipsenrad-Getriebe 5.6 angetrieben und so mit diesem gekoppelt, daß die Stacheln 5.7 im Moment des Auftauchens und Überganges in den Fördertrum 5.2 ein Geschwindigkeitsminimum und im Moment des Abtauchens ein Geschwindigkeitsmaximum aufweisen.

Im Bereich über der Auftauchstelle der Stachel 5.7 ist eine Fangklappe 5.8 angeordnet, die um eine stellfeste Achse gegen eine Feder 5.9 in Laufrichtung des Fördergurtes 5.3 verschwenkbar ist. Die Fangklappe 5.8 ist tunnelförmig ausgebildet und im Tunnelquerschnitt mit einem in vertikaler Ebene federnd ausweichbaren Vorstopper 5.10 versehen.

Die Leitrinne 5.1 der Takteinrichtung 5 endet über dem Querförderer 6 . Dieser ist vorzugsweise mit dem Muldenförderer beispielsweise einer Fisch-Köpf-Filetiermaschine identisch und besteht aus einer Kette von Aufnahmemulden 6.1, die unmittelbar nebeneinander angeordnet sind und der Einzelaufnahme der Fische dienen. Die Aufnahmemulden 6.1 bestehen jeweils aus einer Körpermulde 6.2 und einer Kopfmulde 6.3, die unter Belassen eines Spaltes 6.4 zwischen sich angeordnet sind. Im Bereich gegenüber der Mündung der Leitrinne 5.1 befindet sich eine Anschlagschiene 6.5 zum Abfangen der Fische an ihrer Schnauze.

Der Querförderer 6 führt die Fische durch die Meßmittel 7 (Fig. 7) . Diese bestehen aus einem Reflextaster 7.1, der über der Bahn des Querförderers 6 angeordnet ist und einen Senderteil 7.2 und Empfängerteil 7.3 umfaßt, und aus einem zusätzlichen Empfängerteil 7.4, der in dem Spalt 6.4 untergebracht ist und mit dem Senderteil 7.2 eine Lichtschranke 7.5 bildet. Der Senderteil 7.2 steht dazu dem Empfängerteil 7.4 gegenüber, während der Empfängerteil 7.3 auf einen Beobachtungspunkt fokussiert ist, der auf der Achse der Lichtschranke 7.5 im Abstand einer mittleren Fischdicke über der Auflagefläche 6.6 der Fische in den Aufnahmemulden 6.1 liegt.

Die Meßmittel 7 sind über eine nicht gezeigte Steuereinheit mit dem Wendemechanismus 8 verbunden (Fig. 8) . Dieser weist entsprechend Fig. 8 eine angetriebene Wendescheibe 8.1 auf, die in dem Spalt 6.4 zwischen den Körpermulden 6.2 und den Kopfmulden 6.3 angeordnet ist und mit ihrer Peripherie um ein geringes über die Auflagefläche 6.6 aufragt. Die Wendescheibe 8.1 ist mit gegenüber der Geschwindigkeit des Querförderers 6 etwa doppelter Geschwindigkeit und mit diesem mitlaufend angetrieben. Der Wendescheibe 8.1 liegt ein in den Spalt 6.4 hineinragender Niederhalter 8.2 gegenüber, der als geschleppter Schwenkhebel ausgebildet und durch den Fisch gegen eine Feder 8.3 verdrängbar ist.

Der Niederhalter 8.2 ist um eine gestellfeste Achse 8.4 schwenkbar und trägt im Bereich seines freien Endes einen hakenförmigen Wendehebel 8.5 , der an dem Niederhalter 8.2 gelenkig und in dessen Schwenkebene schwenkbar gelagert ist. Der Wendehebel 8.5 hat eine der Wendescheibe 8.1 zuweisende konkave Fangfläche 8.6, die den über die Auflagefläche 6.6 der Aufnahmemulden 6.1 aufragenden Teil der Peripherie der Wendescheibe 8.1 überspannt. An dem Schwenkhebel 8.5 greift ein Lenker 8.7 an, der mit einer Kurbel 8.8 verbunden ist, deren Kurbelachse derjenigen 8.4 des Niederhalters 8.2 entspricht. Die Kurbel 8.8 ist mittels eines Pneumatikzylinders 8.9 schwenkbar betätigbar.

Die Wirkungsweise der vorstehend beschriebenen Einrichtung ist folgende: Die mittels einer geeigneten Beschickeinrichtung in der Regel schubweise in den Aufgabenbereich 1.11 des Förderers 1 eingebrachten Fische gelangen zunächst auf die Förderfläche 1.2 des Wanderrostes 1.1, der aufgrund der gegenphasigen Hebe-Vorschub- bzw. Senk-Rückzug-Oszillationsbewegung der Teilroste bewirkt, daß die Fischansammlung in einen einlagigen Fischstrom umgewandelt wird. Dabei werden die Fische durch die laminierende Wirkung der durch die Roststäbe 1.3 gebildeten Förderfläche 1.2 weitgehend längsgerichtet, in welcher Lage sie dem Abgabeende des Wanderrostes 1.1 zugeführt werden. Hier fallen die Fische in die darunter befindliche Richtrinne 2.1, wobei die Verlängerungen der beiden Randstäbe 1.12 und des Mittelstabes 1.13 Fallräume bilden, die die Fische nur längsausgerichtet passieren können. Der Abwurf erfolgt geführt durch die Leitfläche 1.15 in eine der beiden durch die Leitschiene 2.5 voneinander getrennten Teilbahnen der Richtrinne 2.1 . Infolge der Oszillationsbewegung der Richtrinne 2.1 werden die Fische unter Beibehaltung ihrer Längsausrichtung in dieser Teilbahn vorgeschoben, wobei jeder Fisch nur in seiner Schwimmrichtung gefördert wird. Da die Fische sowohl mit dem Kopf als auch mit dem Schwanz voraus in die Richtrinne 2.1 gelangen, bedeutet dies, daß letztere die Richtrinne 2.1 aufwärts gefördert werden. Während die mit dem Kopf voraus weisenden Fische in der Richtrinne 2.1 abwärts vorgeschoben werden, werden die mit dem Schwanz abwärts weisenden Fische mit dem Kopf voraus der Wendevorrichtung 3 zugeführt, durch deren Bürstenwalze 3.3 erfaßt und der Richtrinne 2.1 gewendet wieder zugeleitet. Die Übergabe erfolgt dabei bewirkt durch den Leitsteg 3.6 in die freie Teilbahn der Richtrinne 2.1, so daß in dieser zwei sich ohne gegenseitige Behinderung abwärts vorbewegende Fischströme aus Fischen gebildet werden, die mit dem Kopf voraus der Ausrichtvorrichtung 4 zur Vereinheitlichung ihrer Bauch-Rücken-Lage zugeführt werden.

In der Ausrichtvorrichtung 4 werden die beiden Fischströme vereinigt. Jeder Fisch wird unter Ausnutzung seiner Querschnittsgeometrie zunächst in Schwimmlage aufgerichtet und dann in eine einheitliche Seitenlage gebracht. Zuviel herangeführte Fische können über die seitlichen Ausformungen 4.3 hinweg aus dem Fischstrom abgeleitet und über einen geeigneten Förderer dem Prozeß wieder zugeführt werden.

In der anschließenden Takteinrichtung 5 werden die Fische zunächst durch die Fangklappe 5.8 gestoppt, wobei ihre Schnauze in deren vorderem Endbereich zur Anlage kommt. Ein sich eventuell über den ersten Fisch schiebender zweiter Fisch wird durch den Vorstopper 5.10 zurückgehalten. Der unten liegende erste Fisch wird nun durch die mit dem Fördergurt 5.3 in die Leitrinne 5.1 hochgeführten Stacheln 5.7 erfaßt und vorbewegt. Dabei wird die Fangklappe 5.8 durch den Fisch mitgenommen, bis dieser freikommt. Aufgrund der Lage der Schwenkachse der Fangklappe 5.8 verändert der Vorstopper 5.10 dabei seine Höhenlage kaum, so daß ein aufliegender zweiter Fisch während dieses Vorgangs weiter zurückgehalten wird. Nach Hervorziehen des unteren Fisches nimmt der aufliegende Fisch vorgeschoben durch den Förderdruck der Richtrinne 2.1, dessen ursprüngliche Stellung ein, bis die folgend auftauchenden Stacheln 5.7 diesen Fisch erfassen. Das Erfassen des Fisches durch die Stacheln 5.7 erfolgt bei niedriger Geschwindigkeit, die nach dem Zugriff gesteigert wird, so daß vergleichsweise geringe Massenkräfte an dem Fisch wirksam sind.

Die Übergabe der Fische an den Querförderer 6 geschieht bei einem Geschwindigkeitsmaximum unter zeitlicher Abstimmung der Taktung mit der Stellung der Aufnahmemulden 6.1 .

Da das Naturprodukt Fisch insbesondere hinsichtlich der Bauch-Rückenlage keine fehlerfreie Ausrichtung möglich macht, werden die in den Aufnahmemulden 6.1 geförderten Fische lagekontrolliert. Dies geschieht in der Meßstation 7, wobei der Kontrollvorgang durch Unterbrechen der Lichtschranke 7.5 durch den Fisch initiiert und anschließend eine Reflexmessung durchgeführt wird, bei der das Reflexsignal bezüglich seines Intensitätsverlaufs ausgewertet wird. Dabei signalisiert eine Minimum-Maximum-Signalfolge eine Falschlage, da dies bedeutet, daß der Fisch mit dem dunklen, d. h. Licht stärker absorbierenden Rücken voraus gefördert wird. In einem solchen Fall wird der nachgeschaltete Wendemechanismus 8 in Bereitschaft versetzt, in Aktion zu treten, wenn dieser Fisch die entsprechende Position erreicht hat.

Wie aus den Figuren 9a) bis c) ersichtlich, wird dazu der Wendehebel 8.5 durch Aktivierung des Pneumatikzylinders 8.9 veranlaßt, in die Bahn des zu wendenden Fisches einzuschwenken (Fig. 8), diesen zu hinterfassen und gegen die Wendescheibe 8.1 zu drängen. Aufgrund der gegenüber der Fördergeschwindigkeit des Querförderers 6 höheren Umfangsgeschwindigkeit der Wendescheibe 8.1 wird der Fisch in einer Rollbewegung um seine Längsachse gewendet.

In der Zeichnung ist aus Gründen der Übersichtlichkeit eine einbahnige Zuführeinrichtung dargestellt. Um die von der nachgeschalteten Bearbeitungsmaschine geforderte Beschickleistung zu erbringen, hat sich in der Praxis eine Vierbahn-Anordnung bewährt. Die Zeichnung zeigt weiter eine Funktions-Reihenfolge, die jedoch veränderbar ist, ohne daß dadurch der Erfindungsgedanke verlassen wird. So ist es denkbar, daß die Ausrichtvorrichtung 4 in den Wirkbereich der Takteinrichtung 5 integriert ist.

## Patentansprüche

1. Automatische Einrichtung zum geordneten Überführen von Fischen in eine Fischbearbeitungsmachine umfassend
- einen Zubringerförderer,
- Mittel (1) zum Verteilen und Entzerren der Fische aus einer Fischmasse,
- Mittel (2) zum Längsteilen der Fische mit einer Wendevorrichtung (3) zum Ausrichten der Fische in einheitliche Kopf-Schwanz-Lage,
- Mittel (4) zum Ausrichten der Fische in einheitliche Bauch-Rücken-Lage,
- Mittel (5) zur Einzelentnahme und taktweisen Eingabe der Fische in einen Querförderer (6) mit Kammern zur Einzelaufnahme der Fische,
- Sensormittel (7) zur Kontrolle der Bauch-Rücken-Lage jedes Fisches und
- Mittel (8) zum Wenden fehlliegender Fische in einheitliche Bauch-Rücken-Lage, wobei die Sensormittel einen über der Bahn des Querförderers (6) angeordneten Reflextaster (7.1) aus einem Senderteil (7.2) und einem Empfängerteil (7.3) umfassen.

2. Einrichtung nach Anspruch 1, **dadurch gekennzeichnet**, daß die Mittel (1 ) zum Verteilen und Entzerren einen Wanderrost (1.1) mit in Förderrichtung der Fische ausgerichteten Roststäben (1.3) umfaßt, wobei jeweils benachbarte Roststäbe (1.3) eine gegenphasige Hebe-Vorschub- bzw. Senk-Rückzug-Oszillationsbewegung ausführen.

3. Einrichtung nach Anspruch 2, **dadurch gekennzeichnet,** daß die Förderfläche (1.2) des Wanderrostes (1.1) mindestens eine durch seitliche Schulterelemente (1.14) begrenzte Längskammer aufweist, deren Breite etwa der doppelten Breite des größten bestimmungsgemäß zu verarbeitenden Fisches entspricht, wobei sowohl die Randstäbe (1.12) als auch jeweils der zwischen diesen befindliche mittlere Roststab (1.13) über das ablaufseitige Ende der übrigen Roststäbe (1.3) hinaus verlängert sind.

4. Einrichtung nach Anspruch 2 oder 3, **dadurch gekennzeichnet**, daß die Förderfläche (1.2) des Wanderrostes (1.1) mindestens bereichsweise in Förderrichtung ansteigend ausgeführt ist.

5. Einrichtung nach einem der Ansprüche 1 bis 4, **dadurch gekennzeichnet**, daß die Mittel zum Längsrichten (2) mindestens eine in Längsrichtung oszillierend angetriebene Richtrinne (2.1) im wesentlichen U-förmigen Querschnitts aufweist, wobei die Breite ihrer Stützfläche (2.4) etwa der doppelten Breite des größten bestimmmungsgemäß zu verarbeitenden Fisches entspricht und wobei die Richtrinne (2.1) unterhalb des ablaufseitigen Endes der Förderfläche (1.2) des Wanderrostes (1.1) angeordnet ist.

6. Einrichtung nach Anspruch 5, **dadurch gekennzeichnet,** daß die Richtrinne (2.1) mindestens im Bereich unterhalb der verlängerten Roststäbe (1.3) des Wanderrostes (1.1) mit einer die Richtrinne (2.1) längsmittig in zwei Teilbahnen trennenden Leitschiene (2.5) versehen ist.

7. Einrichtung nach Anspruch 5 oder 6, **dadurch gekennzeichnet**, daß im Bereich der Verlängerung eines der Randstäbe (1.12) des Wanderrostes (1.1) und zwischen dieser und der Richtrinne (2.1) eine Leitfläche (1.15) zur Hinleitung der von dem Wanderrost (1.1) abgegebenen Fische in eine der Teilbahnen der Richtrinne (2.1) angeordnet ist.

8. Einrichtung nach einem der Ansprüche 1 bis 7, **dadurch gekennzeichnet**, daß die Wendevorrichtung (3) eine angetriebene Bürstenwalze (3.3) umfaßt, welche im Bereich über dem hinteren Ende der Richtrinne (2.1) gelagert und von einem zu der Bürstenwalze (3.3) konzentrischen Leitmantel (3.4) umgeben ist, der die Bürstenwalze (3.3) im wesentlichen an ihrem rückwärtigen Umfang umgibt.

9. Einrichtung nach Anspruch 8, **dadurch gekennzeichnet**, daß der Leitmantel (3.4) der Bürstenwalze (3.3) an seiner Innenseite mit einem schraubengangförmigen Leitsteg (3.6) versehen ist.

10. Längsrichteinrichtung in einer automatischen Einrichtung zum geordneten Überführen von Fisch in einer Fischbearbeitungsmaschine nach einem oder mehreren der vorgenannten Ansprüche, mit zwei Paaren nebeneinander angeordneten Richtrinnen (2.1); dadurch gekennzeichnet, daß jeweils die äußeren zu den inneren Richtrinnen gegenphasig oszillierend angetrieben sind.

11. Einrichtung nach Anspruch 10, **dadurch gekennzeichnet**, daß jeweils eine äußere Richtrinne (2.1) und die neben der anderen äußeren befindliche Richtrinne durch mindestens einen um eine vertikale Mittelachse (2.3) schwenkbaren zweiarmigen Lenker (2.2) miteinander verbunden sind.

12. Einrichtung nach einem der Ansprüche 5 bis 11, **dadurch gekennzeichnet**, daß die Stützfläche (2.4) der Richtrinnen (2.1) aufgerauht ist.

13. Einrichtung nach Anspruch 12, **dadurch gekennzeichnet**, daß die Aufrauhung durch Querschliff der Stützflächen (2.4) erzeugt ist.

14. Einrichtung nach einem der Ansprüche 1 bis 13, **dadurch gekennzeichnet**, daß die Mittel (4) zum Ausrichten der Fische in einheitliche Bauch-Rücken-Lage je eine jeder Richtrinne (2.1) ausgangsseitig zugeordnete Ausrichtstation umfaßt, wobei jede einen Leitkanal (4.1) aus Leitflächen (4.2) aufweist, mit deren Hilfe jeder Fisch auf den Bauch stellbar und in bezüglich der Lage seines Rückens einheitliche Seitenlage überführbar ist.

15. Einrichtung nach Anspruch 14, **dadurch gekennzeichnet**, daß die Leitflächen (4.2) ausgangs des Leitkanals (4.1) mit Ausformungen (4.3) zum Ableiten überschüssig herangeführter Fische versehen sind.

16. Einrichtung nach einem der Ansprüche 1 bis 15, **dadurch gekennzeichnet**, daß die Mittel (5) zum Vereinzeln und zur taktweisen Abgabe jeder Richtrinne (2.1) zugeordnet sind, wobei jede eine starre, jeweils mit der zugehörigen Richtrinne (2.1) fluchtende und an deren Ausrichtvorrichtung (4) anschließende Leitrinne (5.1) aufweist, deren Bodenfläche durch den Fördertrum (5.2) eines endlosen, angetriebenen Fördergurtes (5.3) gebildet ist und über der eine gegen Federkraft verdrängbare Fangklappe (5.8) angeordnet ist.

17. Einrichtung nach Anspruch 16, **dadurch gekennzeichnet**, daß der Fördergurt (5.3) an seiner fördernden Fläche mit Mitnehmern (5.7) in einer Längsteilung zueinander ausgestattet ist, die mindestens der Gesamtlänge des größten bestimmungsgemäß zu verarbeitenden Fisches entspricht.

18. Einrichtung nach Anspruch 17, **dadurch gekennzeichnet**, daß die Mitnehmer (5.7) aus einem Stachel oder mehreren nebeneinander angeordneten Stacheln bestehen.

19. Einrichtung nach einem der Ansprüche 16 bis 18, **dadurch gekennzeichnet**, daß der Fördergurt (5.3) eine ungleichförmige Bewegung ausführt, wobei das Erfassen der Fische bei einem Geschwindigkeitsminimum und die Abgabe der Fische bei einem Geschwindigkeitsmaximum erfolgt.

20. Einrichtung nach Anspruch 19, **dadurch gekennzeichnet**, daß der Antrieb des Fördergurtes (5.3) durch ein Ellipsenrad-Getriebe (5.6) erfolgt.

21. Fischbearbeitungsmaschine umfassend einen mit Kammern versehenen Förderer (6) zur Aufnahme der Fische und Förderung derselben quer zu ihrer Längsachse, sowie Mittel zum Wenden von bezüglich ihrer Bauch- / Rückenlage fehlliegenden Fischen in einheitliche Lage, **dadurch gekennzeichnet**, daß die Mittel (8) zum Wenden eine angetriebene Wendescheibe (8.1) umfassen, die in einem Spalt (6.4) in der Auflagefläche (6.6) für die Fische angeordnet ist, wobei sie mit ihrer Peripherie um ein geringes Maß über die Auflagefläche (6.6) aufragend gelagert ist und der ein gegen die Kraft einer Feder (8.4) verdrängbarer Niederhalter (8.2) gegenüberliegend angeordnet ist.

22. Fischbearbeitungsmaschine nach Anspruch 21, **dadurch gekennzeichnet**, daß dem Niederhalter (8.2) ein hakenförmiger Wendehebel (8.5) zugeordnet ist, der im Endbereich des Niederhalters (8.2) schwenkbar gelagert ist und eine der Wendescheibe (8.1) zuweisende konkave Fangfläche (8.6) aufweist, die den über die Auflagefläche (6.6) der Aufnahmemulden (6.1) aufragenden Teil der Peripherie der Wendescheibe (8.1) im wesentlichen überspannt.

23. Fischbearbeitungsmaschine nach Anspruch 21 oder 22, **dadurch gekennzeichnet**, daß die Wendescheibe (8.1) mit gegenüber der Geschwindigkeit des Förderers (6) größerer Geschwindigkeit angetrieben ist, wobei die Umlaufrichtung so gewählt ist, daß die mit dem Fisch in Kontakt tretende Peripherie eine in Förderrichtung des Förderers (6) weisende Bewegungskomponente aufweist.

24. Fischbearbeitungsmaschine nach einem der Ansprüche 21 bis 23, **dadurch gekennzeichnet**, daß die Peripherie der Wendescheibe (8.1) griffig ausgeführt ist.

25. Fischbearbeitungsmaschine nach einem der Ansprüche 21 bis 24, **dadurch gekennzeichnet,** daß der Wendehebel (8.5) mit einem Stellglied (8.9) versehen ist, das mittels eine Steuereinheit umfassender Sensormittel (7) aktivierbar ist.

26. Fischbearbeitungsmaschine nach Anspruch 25, **dadurch gekennzeichnet**, daß die Sensormittel einen über der Bahn des Querförderers (6) angeordneten Reflextaster (7.1) aus einem Senderteil (7.2) und einem Empfängerteil (7.3) umfassen.

27. Fischbearbeitungsmaschine nach Anspruch 25 oder 26, **dadurch gekennzeichnet,** daß dem Senderteil (7.2) des Reflextasters (7.1) zusätzlich ein in dem Spalt (6.4) angeordneter zweiter Emfängerteil (7.4), eine Lichtschranke mit dem Senderteil (7.2) bildend, gegenübersteht.

28. Fischbearbeitungsmaschine nach einem der Ansprüche 25 bis 27, **dadurch gekennzeichnet,** daß die Sensormittel (7) mit Laserlicht arbeiten.

29. Fischbearbeitungsmaschine nach einem der Ansprüche 25 bis 28, **dadurch gekennzeichnet,** daß die Sensormittel (7) mit einer Steuereinheit verbunden sind, die eine Signalauswertung des Reflextasters (7.1) nur erlaubt, wenn die Lichtschranke unterbrochen wurde.

30. Fischbearbeitungsmaschine nach Anspruch 29, **dadurch gekennzeichnet**, daß Signalauswertung in der Registrierung des Intensivitätsverlaufes des von dem Empfängerteil (7.3) des Reflextasters (7.1) empfangenen Lichtes besteht.

31. Fischbearbeitungsmaschine nach Anspruch 29 oder 30, **dadurch gekennzeichnet,** daß die Steuereinheit ein Steuersignal erzeugt, wenn der Intensitätsverlauf des reflektierten Lichtes eine Minimum-Maximum-Folge aufweist.

## Claims

1. Automatic device for the orderly transfer of fish into a fish processing machine, comprising
- a feed conveyor,
- means (1) for distributing and separating fish from a fish mass,
- means (2) for distributing the fish longitudinally having a turning apparatus (3) for aligning the fish into a uniform head-tail orientation,
- means (4) for adjusting the fish into a uniform belly-back orientation,
- means (5) for individually withdrawing the fish and feeding them in a timed manner to a transverse conveyor (6) which has chambers for individually receiving the fish,
- sensor means (7) for controlling the belly-back orientation of each fish and
- means (8) for turning incorrectly positioned fish into uniform belly-back orientation,
wherein the sensor means comprise a reflex sensor (7.1) arranged above the path of the transverse conveyor (6) and including an emitter portion (7.2) and a receiver portion (7.3).

2. Device as claimed in claim 1, **characterized in** that the distributing and separating means (1) comprise a travelling grate (1.1) having grate bars (1.3) aligned in the conveying direction of the fish, wherein neighbouring grate bars (1.3) perform a counter-phase an oscillation movement of lifting-advance and lowering-return, respectively.

3. Device as claimed in claim 2, **characterized in** that the conveying surface (1.2) of the travelling grate (1.1) has at least one longitudinal chamber which is limited by lateral shoulder elements (1.14), the longitudinal chamber having a width which is essentially double the width of the largest fish predetermined to be processed, the bars (1.12) situated at the edges of the travelling grate as well as a middle bar (1.13) located between these edge bars being arranged to extend beyond the discharge end of the remaining grate bars (1.3).

4. Device as claimed in claim 2 or 3, **characterized in** that the conveying surface (1.2) of the travelling grate (1.1) is inclined upwards in the conveying direction in at least part of its area.

5. Device as claimed in any one of claims 1 to 4, **characterized in** that the means for longitudinally aligning (2) comprises at least one alignment channel (2.1) having an essentially U-shaped section and being driven to oscillate longitudinally, with a supporting surface (2.4) thereof having a width being essentially double the width of the largest fish predetermined to be processed and the alignment channel (2.1) being arranged below the discharge end of the conveying surface (1.2) of the travelling grate (1.1).

6. Device as claimed in claim 5, **characterized in** that the alignment channel (2.1) is provided with a guide rail (2.5) for dividing the alignment channel (2.1) longitudinally and centrally into two channel portions at least in the area below the extended grate bars (1.3).

7. Device as claimed in claim 5 or 6, **characterized in** that a guide face (1.15) for diverting the fish discharged from the travelling grate (1.1) into one channel portion of the alignment channel (2.1) is arranged in the area of the extension of one of the grate edge bars and between this extension and the alignment channel (2.1).

8. Device as claimed in any one of claims 1 to 7, **characterized in** that the turning device (3) comprises a driven brush roller (3.3) mounted in the area of the rear end of the alignment channel (2.1) and surrounded by a concentric guide casing (3.4), which surrounds essentially the rear periphery of the brush roller (3.3).

9. Device as claimed in claim 8, **characterized in** that the guide casing (3.4) of the brush roller (3.3) is provided on its inner face with a helical guide web (3.6).

10. Longitudinally aligned device in an automatic device for the arranged transfer of fish in a fish processing machine according to at least one of the aforementioned claims, said aligning device having two pairs of adjacently arranged alignment channels (2.1) **characterized in** that the channels are driven to oscillate, such that the oscillation of the outer channels is in counter-phase to the oscillation of the inner channels.

11. Device as claimed in claim 10, **characterized in** that one outer alignment channel (2.1) and the alignment channel arranged beside the other outer one are connected via at least one double armed crank (2.2), respectively, which is pivotal about a vertical central axis (2.3).

12. Device as claimed in any one of claims 5 to 11, **characterized in** that the supporting surface (2.4) of the alignment channels (2.1) is roughened.

13. Device as claimed in claim 12, **characterized in** that the roughening is generated by transverse grinding of the supporting surface (2.4).

14. Device as claimed in any one of claims 1 to 13, **characterized in** that the means (4) for aligning the fish into a uniform belly-back orientation comprises an orientating station associated with the exit end of each alignment channel (2.1), respectively, each orientating station comprising a guide channel (4.1) formed by guide surfaces (4.2) for placing the fish upright on their bellies and transferring the fish into a uniform lateral orientation with respect to the position of their backs.

15. Device as claimed in claim 14, **characterized in** that at the exit of the guide channel (4.1) the guide surfaces (4.2) are provided with a contour (4.3) for discharging surplus fish.

16. Device as claimed in any one of claims 1 to 15, **characterized in** that said means (5) for individualizing and for the timed feeding of the fish, are associated with each alignment channel (2.1), each one thereof having, respectively, a rigid guide channel (5.1) lying flush with the associated alignment channel (2.1) and arranged to continue downstream from the respective orientation means (4), the base surface of the guide channel (5.1) being formed by the conveying run (5.2) of an endless driven conveyor belt (5.3), above which guide channel (5.1) is arranged a resiliently yieldable catch flap (5.8).

17. Device as claimed in claim 16, **characterized in** that the conveyor belt (5.3) is provided with entrainers (5.7) on its conveying surface, the entrainers (5.7) being separated from one another by a lengthwise distance corresponding at least to the total length dimension of the largest fish predetermined to be processed.

18. Device as claimed in claim 17, **characterized in** that the entrainers (5.7) consist of one spike or several adjacent spikes.

19. Device as claimed in any one of claims 16 to 18, **characterized in** that the conveyor belt (5.3) performs a non-uniform movement, whereby the engagement of the fish is performed at minimum speed and the delivery of the fish is performed at maximum speed.

20. Device as claimed in claim 19, **characterized in** that the conveyor belt (5.3) is driven by means of an elliptical wheel gear (5.6).

21. Fish processing machine comprising a conveyor (6) equipped with chambers for receiving said fish and for conveying the same in a direction transversal to their longitudinal extension, as well as means for turning fish lying incorrectly with regard to their belly-back orientation, into uniform orientation, **characterized in** that the means (8) for turning comprise a driven turning disc (8.1), which is arranged in a gap (6.4) within the supporting surface (6.6), with its periphery slightly extending above the supporting surface (6.6) and a retaining member (8.2) being arranged to resiliently oppose said turning wheel (8.1), against the force of a spring (8.4).

22. Fish processing machine as claimed in claim 21, **characterized in** that a hook-shaped turning lever (8.5) is associated with the retaining member (8.2), which turning lever (8.5) is pivotally mounted on an end portion of the retaining member (8.2) and has a concave engagement face (8.6) arranged to face the turning wheel (8.1) and extending over that part of the periphery of the turning wheel (8.1) which protrudes above the supporting surface (6.6) of the receiving troughs (6.1).

23. Fish processing machine as claimed in claim 21 or 22, **characterized in** that the turning disk (8.1) is driven at a higher speed than the speed of the conveyor (6), the direction of rotation being selected such that the peripheral portion of the turning disk contacting the fish has a component of movement in the conveying direction of the conveyor (6).

24. Fish processing machine as claimed in any one of claims 21 to 23, **characterized in** that the periphery of the turning disk (8.1) is formed to be frictional.

25. Fish processing machine as claimed in any one of claims 21 to 24, **characterized in** that the turning lever (8.5) is provided with an actuator member (8.9), which is activated by sensor means (7) comprising a control unit.

26. Fish processing machine as claimed in claim 25, **characterized in** that the sensor means comprise a reflex sensor (7.1) arranged above the path of the transverse conveyor (6) and including an emitter portion (7.2) and a receiver portion (7.3).

27. Fish processing machine as claimed in claim 25 or 26, **characterized in** that the emitting portions (7.2) of the reflex sensor (7.1) is additionally associated with a second receiver portion (7.4) being arranged in the gap (6.4) to oppose and form a light barrier with the emitter portion (7.2).

28. Fish processing machine as claimed in any one of claims 25 to 27, **characterized in** that the sensor means (7) operate with laser light.

29. Fish processing machine as claimed in any one of claims 25 to 28, **characterized in** that the sensor means (7) are connected to a control unit, which is adapted to perform the analysis of signals from the reflex sensor (7.1) only when the light barrier is interrupted.

30. Fish processing machine as claimed in claim 29, **characterized in** that the signal analysis consists of registering the course of intensity of the light received from the receiver portion (7.3) of the reflex sensor (7.1).

31. Fish processing machine as claimed in claim 29 or 30, **characterized in** that the control unit is adapted to generate a control signal when the course of intensity of the reflected light has a minimum-maximum sequence.

## Revendications

1. Dispositif automatique pour le transfert ordonné de poissons dans une machine de transformation de poissons, comprenant :
- un transporteur de présentation,
- des moyens (1) pour répartir et redresser les poissons provenant d'une masse de poissons,
- des moyens (2) pour séparer longitudinalement les poissons, à l'aide d'un appareil de retournement (3), destiné à orienter les poissons selon une position uniforme tête-queue,
- des moyens (4) pour orienter les poissons dans une position uniforme ventre-dos,
- des moyens (5) pour prélever les poissons à titre individuel et les introduire d'une manière cadencée dans un transporteur transversal (6) muni de chambres destinées au logement individuel des poissons,
- des moyens capteurs (7), pour réguler la position ventre-dos de chaque poisson, et
- des moyens (8) pour retourner les poissons en se trouvant en mauvaise position et les ramener à une position uniforme ventre-dos,
où les moyens capteurs comportent un capteur par réflexion (7.1), disposé sur le trajet du transporteur transversal (6), et constitué d'une partie émetteur (7.2) et d'une partie récepteur (7.3).

2. Dispositif selon la revendication 1, caractérisé en ce que les moyens (1) de répartition et de redressement comportent une grille à chaîne sans fin (1.1), qui elle-même comporte des barreaux de grille (1.3), orientés dans la direction de transport des poissons, les barreaux de grille (1.3) voisins exécutant un mouvement d'oscillation levage-avance ou descente-retour, en opposition de phase.

3. Dispositif selon la revendication 2, caractérisé en ce que la surface transporteuse (1.2) de la grille à chaîne sans fin (1.1) comporte au moins une chambre longitudinale, délimitée par des éléments d'épaulement latéraux (1.14), et dont la largeur correspond approximativement au double de la largeur du poisson le plus gros devant subir une transformation selon l'invention, où tant les barreaux marginaux (1.12) que chaque barreau de grille (1.13) central se trouvant entre deux de ces derniers sont prolongés au-delà de l'extrémité, côté décharge, des autres barreaux de grille (1.3).

4. Dispositif selon la revendication 2 ou 3, caractérisé en ce que la surface transporteuse (1.2) de la grille à chaîne sans fin (1.1) est réalisée, au moins par zones, en montant dans la direction du transport.

5. Dispositif selon l'une des revendications 1 à 4, caractérisé en ce que les moyens d'orientation longitudinale (2) comportent au moins une gouttière d'alignement (2.1), entraînée en oscillation dans la direction longitudinale et ayant pour l'essentiel une section transversale en U, la largeur de sa surface d'appui (2.4) correspondant approximativement au double de la largeur du poisson le plus gros devant être transformé avec l'appareil selon l'invention, la gouttière d'alignement (2.1) étant disposée en-dessous de l'extrémité, côté décharge, de la surface transporteuse (1.2) de la grille à chaîne sans fin (1.1).

6. Dispositif selon la revendication 5, caractérisé en ce que la gouttière d'alignement (2.1) est, au moins dans la zone située en-dessous des barreaux de grille prolongés (1.3) de la grille à chaîne sans fin (1.1), pourvue d'une glissière de guidage (2.5), qui sépare la gouttière d'alignement (2.1), selon son axe longitudinal, en deux chemins partiels.

7. Dispositif selon la revendication 5 ou 6, caractérisé en ce que, dans la zone du prolongement de l'un des barreaux de grille (1.12) de la grille à chaîne sans fin (1.1), et entre ce prolongement et la gouttière d'alignement (2.1), une surface de guidage (1.15) est disposée, pour envoyer les poissons, déchargés de la grille à chaîne sans fin (1.1), dans l'un des chemins partiels de la gouttière d'alignement (2.1).

8. Dispositif selon l'une des revendications 1 à 7, caractérisé en ce que l'appareil de retournement (3) comporte un tambour brosseur mené (3.3), qui est logé dans la zone située au-dessus de l'extrémité arrière de la gouttière d'alignement (2.1) et est entouré d'une enveloppe de guidage (3.4), concentrique du tambour brosseur (3.3), enveloppe de guidage qui pour l'essentiel entoure le tambour brosseur (2.3) sur sa périphérie arrière.

9. Dispositif selon la revendication 8, caractérisé en ce que l'enveloppe de guidage (3.4) du tambour brosseur (3.3) est, sur sa face intérieure, pourvue d'une traverse de guidage (3.6) en forme de pas de vis.

10. Dispositif d'alignement longitudinal, dans un dispositif automatique de transfert ordonné de poissons dans une machine de transformation de poissons selon l'une ou plusieurs des revendications précédentes, comportant deux gouttières d'alignement (2.1), disposées par paires l'une à côté de l'autre, caractérisé en ce que les gouttières d'alignement extérieures sont entraînées en oscillation, en opposition de phase avec la gouttière d'alignement intérieure correspondante.

11. Dispositif selon la revendication 10, caractérisé en ce que chaque gouttière d'alignement extérieure (2.1) et la gouttière d'alignement se trouvant à côté de l'autre gouttière d'alignement extérieure, sont reliées l'une à l'autre par au moins une bielle à deux bras (2.2), pouvant pivoter autour d'un axe central vertical (2.3).

12. Dispositif selon l'une des revendications 5 à 11, caractérisé en ce que la surface d'appui (2.4) des gouttières d'alignement (2.1) a été rendue rugueuse.

13. Dispositif selon la revendication 12, caractérisé en ce que les surfaces d'appui (2.4) ont été rendues rugueuses par polissage en section.

14. Dispositif selon l'une des revendications 1 à 13, caractérisé en ce que chacun des moyens (4) d'orientation des poissons dans une position uniforme ventre-dos comporte une station d'orientation, affectée côté sortie à chaque gouttière d'alignement (2.1), chacune comportant un caniveau de guidage (4.1) constitué de surfaces de guidage (4.2), à l'aide desquelles chaque poisson peut être placé sur le ventre et prendre une position latérale, qui est uniforme par rapport à la position de son dos.

15. Dispositif selon la revendication 14, caractérisé en ce que les surfaces de guidage (4.2), en sortie du caniveau de guidage (4.1), sont pourvues de chicanes (4.3) pour dévier les poissons amenés en excès.

16. Dispositif selon l'une des revendications 1 à 15, caractérisé en ce que les moyens (5) d'individualisation et d'amenée cadencée sont affectés à chaque gouttière d'alignement (2.1), chacune comportant une gouttière de guidage (5.1), en enfilade avec la gouttière d'alignement correspondante (2.1), et se poursuivant par son appareil d'orientation (4), gouttière de guidage dont la surface de fond est formée par le brin transporteur (5.2) d'une courroie transporteuse menée sans fin (5.3) et est disposée au-dessus d'un volet collecteur (5.8), pouvant être poussé contre la force d'un ressort.

17. Dispositif selon la revendication 16, caractérisé en ce que la courroie transporteuse (5.3) est, sur sa surface transporteuse, équipée de taquets d'entraînement (5.7) selon une répartition longitudinale les uns par rapport aux autres, qui correspond au moins à la longueur totale du poisson le plus grand devant être transformé selon l'invention.

18. Dispositif selon la revendication 17, caractérisé en ce que les taquets d'entraînement (5.7) sont constitués d'une pointe ou de plusieurs pointes disposées les unes à côté des autres.

19. Dispositif selon l'une des revendications 16 à 18, caractérisé en ce que la courroie transporteuse (5.3) exécute un mouvement non-uniforme, la saisie des poissons s'effectuant à un minimum de vitesse, et la décharge des poissons s'effectuant à un maximum de vitesse.

20. Dispositif selon la revendication 19, caractérisé en ce que l'entraînement de la courroie transporteuse (5.3) est réalisé par un engrenage à roue elliptique (5.6).

21. Machine de traitement de poissons, comportant un transporteur (6), muni de chambres, pour loger les poissons et les transporter transversalement à leur axe longitudinal, ainsi que des moyens pour retourner, en les amenant dans une position uniforme, les poissons qui se présentent mal pour ce qui est de leur position ventre/dos, caractérisée en ce que les moyens (8) de retournement comportent un disque de retournement mené (8.1), qui est disposé dans une fente (6.4) de la table (6.6) servant de support aux poissons, ce disque, par sa périphérie, étant logé en dépassant d'une petite distance au-delà de la surface de support (6.6), et étant disposé en un point opposé à un serre-flan (8.2), pouvant être déplacé contre la force d'un ressort (8.4).

22. Machine de traitement de poissons selon la revendication 21, caractérisée en ce qu'au serre-flan (8.2) est affecté un levier de retournement (8.5) en forme de crochet, qui est logé en pivotement dans la zone terminale du serre-flan (8.2) et comporte une surface collectrice concave (8.6), dirigée vers le disque de retournement (8.1), surface collectrice qui pour l'essentiel recouvre la partie de la périphérie du disque de retournement (8.1) qui dépasse de la surface de support (6.6) des logements (6.1).

23. Machine de traitement de poissons selon la revendication 21 ou 22, caractérisée en ce que le disque de retournement (8.1) est entraîné à une vitesse plus grande que la vitesse du transporteur (6), le sens de rotation étant choisi de telle sorte que la périphérie entrant en contact avec le poisson présente une composante de mouvement dirigée dans le sens de transport du transporteur (6).

24. Machine de traitement de poissons selon l'une des revendications 21 à 23, caractérisée en ce que la périphérie du disque de retournement (8.1) a une structure antidérapante.

25. Machine de traitement de poissons selon l'une des revendications 21 à 24, caractérisée en ce que le levier de retournement (8.5) est pourvu d'un vérin (8.9), qui peut être activé à l'aide de moyens capteurs (7) comportant une unité de commande.

26. Machine de traitement de poissons selon la revendication 25, caractérisée en ce que les moyens capteurs comportent un capteur par réflexion (7.1), constitué d'une partie émetteur (7.2) et d'une partie récepteur (7.3), disposés sur le trajet du transporteur transversal (6).

27. Machine de traitement de poissons selon la revendication 25 ou 26, caractérisée en ce qu'à la partie émetteur (7.2) du capteur par réflexion (7.1) est en outre opposée une deuxième partie récepteur (7.4), disposée dans la fente (6.4), et qui avec la partie émetteur (7.2) forme un barrage photoélectrique.

28. Machine de traitement de poissons selon l'une des revendications 25 à 27, caractérisée en ce que les moyens capteurs (7) travaillent avec une lumière laser.

29. Machine de traitement de poissons selon l'une des revendications 25 à 28, caractérisée en ce que les moyens capteurs (7) sont reliés à une unité de commande, qui ne permet une évaluation du signal du capteur par réflexion (7.1) que quand la barrière photoélectrique a été interrompue.

30. Machine de traitement de poissons selon la revendication 29, caractérisée en ce que l'évaluation du signal consiste en l'enregistrement de l'évolution de l'intensité de la lumière reçue par la partie récepteur (7.3) du capteur par réflexion (7.1).

31. Machine de traitement de poissons selon la revendication 29 ou 30, caractérisée en ce que l'unité de commande émet un signal de commande quand l'évolution de l'intensité de la lumière réfléchie présente une séquence minimum-maximum.
